# EUROPÄISCHE PATENTSCHRIFT

(11) **EP 0 547 254 B1**
(45) Veröffentlichungstag und Bekanntmachung des Hinweises auf die Patenterteilung: **11.09.1996**
(21) Anmeldenummer: 91121495.5
(22) Anmeldetag: 14.12.1991
(51) Int. Cl.: F04C 23/00, C02F 7/00, C02F 3/20

(54) **Vorrichtung zur Erzeugung eines Luft-/Sauerstoffstromes bei Kläranlagen**
Apparatus for generating an air/oxygen stream in biological purification plants
Procédé pour créer un courant d'air ou d'oxygène dans les installations de clarification biologique

(43) Veröffentlichungstag der Anmeldung: 23.06.1993
(73) Patentinhaber: Wilms, Peter, D-45731 Waltrop (DE)
(72) Erfinder: Wilms, Peter, D-45731 Waltrop (DE)
(74) Vertreter: Patentanwälte Meinke, Dabringhaus und Partner

(56) Entgegenhaltungen:
- EP-A- 0 163 821
- EP-A- 0 360 048
- DE-A- 3 325 193
- PATENT ABSTRACTS OF JAPAN vol. 7, no. 195 (C-183)(1340) 25. August 1983, & JP-A-58 095 595 (EBARA INFILCO) 7 Juni 1983
- PATENT ABSTRACTS OF JAPAN vol. 7, no. 147 (C-173)(1292) 28. Juni 1983, & JP-A-58 058 193 (EBARA INFILCO) 6 April 1983

## Beschreibung

Die Erfindung richtet sich auf eine Vorrichtung zur Erzeugung eines Luft-/Sauerstoffstromes der im Oberbegriff des Anspruches 1 angegebenen Gattung. Eine solche Vorrichtung ist aus der DE-A-33 25 193 bekannt, bei der ein auf einem offenen Rahmen von einem Elektromotor getriebener Verdichterblock vorgesehen ist, wobei zwischen Verdichterblock und Elektromotor ein Radiallüfter vorgesehen ist, der einen Flachkühler für die Druckluft beaufschlagt. Sieht man von Kühlrippen am Abscheider des Verdichterblocks ab, ist der Verdichter selbst nicht aktiv gekühlt.

Bei der Reinigung von Gewässern und/oder bei dem Versuch, belastete natürliche Gewässer wieder weitestgehend in ihren natürlichen Zustand zurückzuversetzen, wird neben anderen Maßnahmen auch versucht, Sauerstoff den Wässern zuzuführen. In Kläranlagen ist es dabei bekannt, etwa über Rieseleinrichtungen das Wasser im freien Fall durch Umgebungsluft zu führen, um so in mechanischer Weise Luft in das Wasser einzubringen. Bei natürlichen Gewässern kann dies durch künstliche Schikanen, Wehre oder kleine Wasserfälle nachvollzogen werden.

Auch ist es bekannt, die Wässer stark zu verwirbeln, um auch auf diese Art und Weise Umgebungsluft in das Wasser einzubringen. Reicht diese Maßnahme nicht aus, bemüht man sich, über gelochte Rohrleitungen unmittelbar Luft in die Wässer einzublasen, wozu bisher sehr leistungsstarke Gebläse notwendig sind. Diese Gebläse sind im Betrieb ausgesprochen kostenaufwendig. Reichen die Maßnahmen nicht aus, ist es auch bekannt, unmittelbar reinen Sauerstoff in die Gewässer über Gebläse einzubringen. Hier ist der reine Sauerstoff bereits als Rohstoff vergleichsweise kostenintensiv, so daß auch diese Anlagen nur mit erheblichem wirtschaftlichen Aufwand betrieben werden können.

Ein besonderes Problem der bekannten Lösungen besteht in deren beschränktem jahreszeitlichen Einsatz. So fördern im Sommer die Luftförderanlagen zwangsläufig Luft mit Umgebungstemperatur in die Gewässer, wobei die Umgebungstemperatur häufig über der Wassertemperatur liegt, mit der Folge, daß sich die ohnehin schon belasteten Gewässer zusätzlich aufheizen. Umgekehrt ist der Einsatz von reinem Sauerstoff, z.B. in kalten Jahreszeiten, eingeschränkt, hier kann es zum Einfrieren der Aggregate kommen. Um dies zu verhindern, müssen dann besondere, wiederum kostenaufwendige Maßnahmen getroffen werden.

Aufgabe der Erfindung ist die Schaffung einer Lösung, mit der mit wirtschaftlichen Mitteln und insbesondere unabhängig von dem jahreszeitlich bedingten äußeren Parametern die Einbringung von Luft/Sauerstoff in Gewässer möglich gemacht wird, wobei eine hohe Mobilität der entsprechenden Vorrichtung gewährleistet sein soll.

Mit einer Vorrichtung der eingangs bezeichneten Art wird diese Aufgabe gemäß der Erfindung dadurch gelöst, daß der Elektromotor mit einer Kühlkanalkapselung und mit einem Lüfterrad zur Erzeugung eines Kühlluftstromes für den Verdichter versehen ist und/oder daß der Elektromotor und der Verdichter in einer gemeinsamen, einen Strömungskanal für einen Kühlluftstrom für den Verdichter bildenden Kapselung angeordnet sind.

Es hat sich gezeigt, daß es mit der Erfindung möglich ist, unter sehr wirtschaftlichen Bedingungen große Luft-/Sauerstoffmengen in Gewässer einzubringen, da die Verdichterleistungen hier besonders günstig sind. Dem bei einem Verdichter im Prinzip bestehenden Nachteil, daß die geförderte, den Verdichter verlassende Luft gegenüber der Umgebung vergleichsweise stark aufgeheizt ist, wird dadurch Rechnung getragen, daß ein zusätzlicher Kühler für diesen Luft-/Sauerstoffstrom zur Verfügung steht. Damit ist u.a. auch eine einfache Luftauslaßtemperatursteuerung je nach Jahreszeit möglich. Wird beispielsweise in der kälteren Jahreszeit das Einbringen eines wärmeren Luftstromes gewünscht, wird die Leistung des Kühlers reduziert, wird in warmen Jahreszeiten die Einbringung kühlerer Luft gewünscht, kann die Leistung des Kühlers gesteigert werden, wobei z.B. eine entsprechende Regelung auch über die Drehzahl des Verdichters erfolgen kann.

Mit einer Kühlkanalkapselung und einem Lüfterrad zur Erzeugung eines Kühlluftstromes für den Verdichter ist es nicht nur möglich, für eine höhere Lebensdauer der betroffenen Aggregate zu sorgen, sondern zugleich die maximal auftretenden Temperaturen zu verringern.

Um eine optimale Kühlung der Aggregate zu erreichen, ist nach der Erfindung auch vorgesehen, daß der Elektromotor und der Verdichter in einer gemeinsamen, einen Strömungskanal für die Kühlluft bildenden Kapselung angeordnet sind. Eine derartige Kapselung kann zusätzlich einen starken Beitrag zur Lärmreduzierung der laufenden Aggregate liefern.

Um für den hier im Vordergrund stehenden Einsatzzweck in besonderer Weise gerüstet zu sein, sieht die Erfindung in weiterer Ausgestaltung vor, daß zwischen Elektromotor und Verdichter (Kompressor) eine Getriebestufe vorgesehen ist. Als Beispiel sei hier angegeben, daß ein 30-kW-Motor für 3000 U/min über die Getriebestufe einen Schraubenverdichter mit 2000 U/min antreibt.

Grundsätzlich ist es möglich, den Kühler für den Luft-/Sauerstoffstrom von der Kühlluft, die den Motor und den Verdichter im Strümungskanal überstreicht, anströmen zu lassen. Hier sieht die Erfindung aber in weiterer Ausgestaltung vor, daß der Kühler für diesen Luft-/Sauerstoffstrom mit einem eigenen Gebläse, z.B. einem Axialgebläse, versehen ist. Diese Maßnahme hat neben anderen Vorteilen einen Vorteil, der darin besteht, daß dieses Axialgebläse getrennt in der Drehzahl regelbar und damit der Kühler in seiner Kühlleistung leichter steuerbar ist, ohne daß dazu die Drehzahl beispielsweise des den Verdichter treibenden Elektromotores variiert werden müßte.

Da der geförderte und in der Temperatur angepaßte Luft-/ Sauerstoffstrom in Gewässer eingebracht wird, muß dafür Sorge getragen werden, daß diese Luft nicht mit umweltgefährdenden Stoffen oder umweltbelastenden Stoffen, wie etwa Schmieröl od. dgl., behaftet ist. Hierzu kann beispielsweise ein Ölabscheider im Luftstrom vorgesehen sein. Zweckmäßig und nach der Erfindung in Ausgestaltung auch vorgesehen, ist der Verdichter als trockenlauffähiger, ölfreier Verdichter ausgebildet.

Weiter oben wurde bereits zur Steuerung angegeben, daß diese drehzahlabhängig vorgenommen werden kann. Hierzu sieht die Erfindung eine entsprechende Elektronik vor, die die Drehzahl in Abhängigkeit der Lufttemperatur steuert, wobei sowohl die Temperatur der Umgebungsluft herangezogen werden kann als auch die Temperatur des Luft-/Sauerstoffstromes am Ausgang der Anlage.

An dieser Stelle sei bemerkt, daß die Bezeichnung "Luft-/ Sauerstoffstrom" deshalb gewählt wurde, um darauf hinzuweisen, daß das für den Einsatz wichtigste Medium der Sauerstoff ist. Dieser kann alleine nach den natürlichen Gegebenheiten der Umgebungsluft in der entsprechenden Zusammensetzung entnommen werden, es kann aber auch an geeigneter Stelle zur Anreicherung mit Sauerstoff reiner Sauerstoff dem entsprechenden Strom zusätzlich hinzugefügt werden.

Zu diesem Zwecke sieht die Erfindung auch vor, daß zwischen dem Verdichter und dem Kühler eine Einspeisung für Sauerstoff oder für mit Sauerstoff angereicherte Luft vorgesehen ist.

Die Erfindung ist nachstehend anhand der Zeichnung beispielsweise näher erläutert. Diese zeigt in
- Fig. 1: einen Längsschnitt durch eine erfindungsgemäße Vorrichtung in vereinfachter Darstellung sowie in
- Fig. 2: einen Querschnitt etwa gemäß Linie II-II in Fig. 1.

Die allgemein mit 1 bezeichnete Vorrichtung weist in einem im wesentlichen geschlossenen, ggf. schallgedämpften Gehäuse 2 einen von einem Elektromotor 3 betriebenen Luftverdichter 4 auf, wobei zwischen Elektromotor 3 und Verdichter 4 ein andeutungsweise wiedergegebenes Übersetzungsgetriebe 5 vorgesehen ist.

Der Verdichter 4 saugt Luft über einen mit einem nicht näher dargestellten Staubfilter versehenen Eingangsstutzen 6 an, verdichtet die Luft und gibt diese ggf. über einen Schalldämpfer 7 an einen Kühler 8 ab, wobei der Luftstrom 10 nach Durchströmen des Kühlers 8 über einen Ausgangsstutzen 9 zum weiteren Gebrauch zur Verfügung steht. Der Austritt des Luftstromes 10 aus dem Stutzen 9 ist mit einem Pfeil 10a, der Eintritt in den Verdichter ist mit einem Pfeil 10b angedeutet.

Der zum Antrieb des Verdichters 4 dienende Elektromotor 3 ist mit einer Kapselung 11 ausgerüstet zur Bildung eines Kühlkanales 12. Zum Eintritt der Kühlluft für den Elektromotor 3 und in der Strömungsrichtung folgend auch für den Verdichter 4 ist das Gehäuse 2 mit einer Eintrittsöffnung 13, z.B. am rückwärtigen Ende versehen, zum Austritt der Kühlluft am unteren Ende z.B. mit einer Ausstrittsöffnung 14, der Strömungsweg dieser Kühlluft ist mit Doppelstrich und Punkt angedeutet und mit dem Bezugszeichen 15 bezeichnet.

Neben dem symbolisch wiedergegebenen Lüfterrad 16 des Elektromotores ist ein weiteres Lüfterrad 17 vorgesehen, um einen entsprechenden Kühlluftstrom sicherzustellen. Die Eintrittsöffnung 13 und die Austrittsöffnung 14 für den Kühlluftstrom 15 können mit entsprechenden Lamellengittern, Filtermatten od. dgl. ausgebildet sein, was in der Figur nicht näher dargestellt ist.

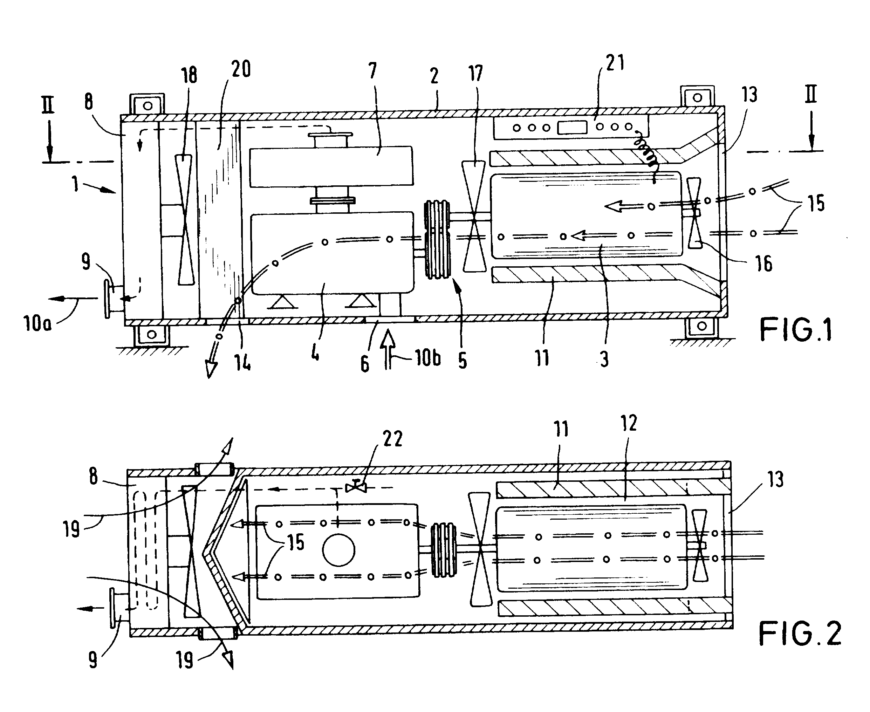

Der Kühler 8 für den Luft-/Sauerstoffstrom 10 weist ein eigenes Axialgebläse 18 auf zur Erzeugung eines Kühlluftstromes gemäß den Pfeilen 19 in Fig. 2, wobei zur seitlichen Ablenkung ein Leitblech 20 den Strömungsweg der Luft 19 am sonstigen Inneren der Vorrichtung 1 abschließt.

Zum Betrieb der Anlage ist eine elektronische Steuerung vorgesehen, die in der Figur lediglich symbolhaft angedeutet ist und das Bezugszeichen 21 trägt. Sensoren, beispielsweise zur Erfassung der Drehzahlen, der Umgebungstemperatur, der Austrittstemperatur hinter den Kühler 8 u. dgl., sind vorgesehen, in der Figur aber nicht näher dargestellt. Für den Fall, daß beispielweise sauerstoffangereicherte Luft oder reiner Sauerstoff zugemischt werden soll, kann eine entsprechende Einspeisung vorgesehen sein. Diese ist in Fig. 2 angedeutet und trägt das Bezugszeichen 22.

Natürlich ist das beschriebene Ausführungsbeispiel der Erfindung noch in vielfacher Hinsicht abzuändern, ohne den Grundgedanken zu verlassen. So kann beispielsweise statt des hier als einfache Übersetzungsstufe eines Riementriebes dargestellten Übersetzungsgetriebes als stufenlos verstellbares Getriebe gestaltet sein, die Vorrichtung 1 kann mit einem eigenen Fahrgestell ausgerüstet sein, sie kann, wie angedeutet, im Teilraster üblicher Container-Größen gestaltet sein, der Kühler 8 kann in axialer Richtung neben dem Elektromotor mit Verdichter angedeutet sein.

## Patentansprüche

1. Vorrichtung (1) zur Erzeugung eines Luft-/Sauerstoffstromes, insbesondere zum Einsatz bei Kläranlagen oder zur Belüftung von belasteten natürlichen Gewässern mit innerhalb eines Tragrahmens (2) vorgesehenem, von einem Elektromotor (3) angetriebenen Verdichter (4) mit einer Kühleinrichtung und mit einem Kühler (8) für den Luft-/Sauerstoffstrom (10),
dadurch gekennzeichnet,
daß der Elektromotor (3) mit einer Kühlkanalkapselung (11) und mit einem Lüfterrad (17) zur Erzeugung eines Kühlluftstromes (15) für den Verdichter (4) versehen ist.

2. Vorrichtung (1) zur Erzeugung eines Luft-/Sauerstoffstromes, insbesondere zum Einsatz bei Kläranlagen oder zur Belüftung von belasteten natürlichen Gewässern mit innerhalb eines Tragrahmens (2) vorgesehenen von einem Elektromotor (3) antriebenen Verdichter (4) mit einer Kühleinrichtung und mit einem Kühler (8) für den Luft-/Sauerstoffstrom (10),
dadurch gekennzeichnet,
daß der Elektromotor (3) und der Verdichter (4) in einer gemeinsamen, einen Strömungskanal für einen Kühlluftstrom (15) für den Verdichter (4) bildenden Kapselung angeordnet sind.

3. Vorrichtung nach Anspruch 1 oder 2,
dadurch gekennzeichnet,
daß zwischen Elektromotor (3) und Verdichter (4) (Kompressor) eine Getriebestufe (5) vorgesehen ist.

4. Vorrichtung nach einem der vorangehenden Ansprüche,
dadurch gekennzeichnet,
daß der Kühler (8) für den Luft-/Sauerstoffstrom mit einem eigenen Gebläse (18), z.B. einem Axialgebläse, versehen ist.

5. Vorrichtung nach einem der vorangehenden Ansprüche,
dadurch gekennzeichnet,
daß der Verdichter (4) als trockenlauffähiger, ölfreier Verdichter ausgebildet ist.

6. Vorrichtung nach einem der vorangehenden Ansprüche,
dadurch gekennzeichnet,
daß eine Steuerung (21) zur Drehzahlsteuerung in Abhängigkeit der Lufttemperatur vorgesehen ist.

7. Vorrichtung nach einem der vorangehenden Ansprüche,
dadurch gekennzeichnet,
daß zwischen dem Verdichter (4) und dem Kühler (8) eine Einspeisung (22) für Sauerstoff oder für mit Sauerstoff angereicherte Luft vorgesehen ist.

## Revendications

1. Dispositif (1) pour la production d'un courant d'air/oxygène, en particulier pour la mise en oeuvre dans des installations d'épuration ou pour l'aération d'eaux naturelles chargées, avec un compresseur (4) entraîné par un moteur électrique (3) prévu à l'intérieur d'un châssis de support (2) comportant un dispositif de refroidissement et un refroidisseur (8) pour le courant d'air/oxygène (10),
caractérisé en ce que
le moteur électrique (3) est équipé d'un blindage de canal de refroidissement (11) et d'une roue de ventilateur (17) pour produire un courant d'air de refroidissement (15) pour le compresseur (4).

2. Dispositif (1) pour la production d'un courant d'air/oxygène, en particulier pour la mise en oeuvre dans des installations d'épuration ou pour l'aération d'eaux naturelles chargées, avec un compresseur (4) entraîné par un moteur électrique (3) prévu à l'intérieur d'un châssis de support (2) avec un dispositif de refroidissement et avec un refroidisseur (8) pour le courant d'air/oxygène (10),
caractérisé en ce que
le moteur électrique (3) et le compresseur (4) sont disposés dans un blindage commun formant un canal d'écoulement pour le courant d'air de refroidissement (15) pour le compresseur (4).

3. Dispositif selon la revendication 1 ou 2, caractérisé en ce
qu'entre le moteur électrique (3) et le compresseur (4), est prévu un étage de réducteur (5).

4. Dispositif selon l'une des revendications précédentes,
caractérisé en ce que
le refroidisseur (8) pour le courant d'air/oxygène est muni d'une soufflante (18), par exemple d'une soufflante axiale.

5. Dispositif selon l'une des revendications précédentes,
caractérisé en ce que
le compresseur (4) est conçu comme compresseur sans huile, capable de fonctionner à sec.

6. Dispositif selon l'une des revendications précédentes,
caractérisé en ce
qu'il est prévu une commande (21) pour la commande du nombre de tours en fonction de la température de l'air.

7. Dispositif selon l'une des revendications précédentes,
caractérisé en ce
qu'entre le compresseur (4) et le refroidisseur (8), il est prévu une alimentation (22) pour l'oxygène ou pour de l'air enrichi à l'oxygène.

## Claims

1. Apparatus (1) for producing an air/oxygen flow, in particular for use in sewage plants or for aerating bodies of charged natural water, with a compressor (4) which is disposed within a support frame (2) and is driven by an electric motor (3), with a cooling arrangement, and with a cooler (8) for the air/oxygen flow (10), characterised in that the electric motor (3) is provided with a cooling passage encapsulation casing (11) and with a fan wheel (17) for producing a cooling air flow (15) for the compressor (4).

2. Apparatus (1) for producing an air/oxygen flow, in particular for use in sewage plants or for aerating bodies of charged natural water, with a compressor (4) which is disposed within a support frame (2) and is driven by an electric motor (3), with a cooling arrangement, and with a cooler (8) for the air/oxygen flow (10), characterised in that the electric motor (3) and the compressor (4) are arranged in a common encapsulation casing which forms a flow passage for a cooling air flow (15) for the compressor (4).

3. Apparatus according to claim 1 or claim 2 characterised in that a transmission stage (5) is provided between the electric motor (3) and the compressor (4).

4. Apparatus according to one of the preceding claims characterised in that the cooler (8) for the air/oxygen flow is provided with its own fan (18), for example an axial fan.

5. Apparatus according to one of the preceding claims characterised in that the compressor (4) is in the form of an oil-free compressor which is capable of running dry.

6. Apparatus according to one of the preceding claims characterised in that there is provided a control (21) for controlling the speed of rotation in dependence on the air temperature.

7. Apparatus according to one of the preceding claims characterised in that a feed-in means (22) for oxygen or for air enriched with oxygen is provided between the compressor (4) and the cooler (8).
